# EUROPÄISCHE PATENTANMELDUNG

(11) **EP 4 269 293 A1**
(43) Veröffentlichungstag der Anmeldung: **01.11.2023**
(21) Anmeldenummer: 23151817.6
(22) Anmeldetag: 16.01.2023
(51) Int. Cl.: B65G 47/256, B65B 35/06, B65B 35/10, B65B 35/20, B65G 47/28, B65G 47/29, B65G 47/84, B65G 43/08, B65G 47/86, B65G 47/08, B65B 35/40, B65B 35/16, B65B 57/14, B07C 5/10, B65G 47/26, B65G 47/14, B65B 35/34, B65B 35/44, B65G 47/88

(54) **VERFAHREN UND VORRICHTUNG ZUR VEREINZELUNG UND VERARBEITUNG KLEINSTÜCKIGER PRODUKTE**

(30) Priorität: 25.04.2022 DE 102022109941
(71) Anmelder: Theegarten-Pactec GmbH & Co. KG, 01237 Dresden (DE)
(72) Erfinder: Oehlert, Volker, 01809 Dohna/Röhrsdorf (DE); Neubert, Dirk, 01796 Dohma (DE); Ehlert, Sebastian, 01237 Dresden (DE); Dietrich, Mike, 01187 Dresden (DE); Spörke, Tobias, 01237 Dresden (DE)
(74) Vertreter: Grünecker Patent- und Rechtsanwälte PartG mbB

(57) **Zusammenfassung**

Die vorliegende Erfindung betrifft eine Vorrichtung und ein Verfahren zur Vereinzelung und Verarbeitung kleinstückiger Produkte, insbesondere in einem Verpackungsprozess, in welchem die Produkte einzeln verpackt werden. Um Störungen im Verpackungsprozess zu vermeiden, umfasst das erfindungsgemäße Verfahren die folgenden Schritte:
a. Schritt A: Zuführung der Produkte (P) in mindestens einem Produktstrom (PS) zu einer Vereinzelungsstation;
b. Schritt B: Vereinzelung der zugeführten Produkte (P) aus dem Produktstrom (PS) in der Vereinzelungsstation;
c. Schritt C: Erfassung jedes vereinzelten Produkts (P) unmittelbar nach der Vereinzelung mittels einer Erfassungseinrichtung (S);
d. Schritt D: Weiterverarbeitung oder Ausschleusung der Produkte (P) basierend auf der Erfassung in Schritt C.

Des Weiteren stellt die Erfindung eine entsprechende Vorrichtung bereit.

## Beschreibung

Die vorliegende Erfindung betrifft eine Vorrichtung und ein Verfahren zur Vereinzelung und Verarbeitung kleinstückiger Produkte, insbesondere in einem Verpackungsprozess, in welchem die Produkte einzeln verpackt werden. Beispiele kleinstückiger Produkte im Sinne der Erfindung sind vorzugsweise Brühwürfel und -tabletten, aber auch Süßwaren wie z. B. Hart- oder Weichkaramellen, Pralinen oder dergleichen.

Zuführ- und Vereinzelungsvorrichtungen werden beispielsweise eingesetzt, wenn Produkte nach ihrer Herstellung in einem anschließenden Verpackungsprozess einzeln weiterverarbeitet bzw. verpackt werden sollen und Direktanbindungen zwischen dem Produktherstellungsprozess und der Verpackung nicht möglich sind.

Diesbezüglich beschreiben die EP 0 801 014 B1 und EP 2 110 327 B1 einbahnige Vorrichtungen und Verfahren, mit welchen Produkte aus einem kontinuierlich vorwärts bewegten Produktstrom vereinzelt werden. Hierzu wird das Produkt mit Hilfe eines Sensors zur Lageerfassung und einem Transporteur möglichst genau zum vereinzelnden Mechanismus positioniert.

Ferner beschreibt die DE 197 15 949 A1 eine Direktsynchronisation von Produkten zur Vereinzelung von Süßwaren und deren Übergabe an eine nachgeordnete Verpackungseinheit einer Verpackungsmaschine, abgestimmt auf einen Maschinentakt der Verpackungseinheit.

Zusammenfassend sind mehrbahnige Positionierungen von Brühwürfeln/ -tabletten mittels eines vakuumunterstützten Zuteilbandes und einer Gabellichtschranke bekannt. Auch das unmittelbare Entnehmen eines Produktes vom Zuführband durch ein mechanisch bewegtes Greiferpaar wird in einbahniger Ausführung im Stand der Technik beschrieben.

Die bekannten Vorrichtungen und Verfahren zur Direktsynchronisation sind jedoch nicht in der Lage, fehlerhafte Produkte (z.B. halbe Produkte) auszusondern, sondern führen diese zwangsweise dem Verpackungsprozess zu. Des Weiteren bieten sie keine Möglichkeit, ein falsch gegriffenes Produkt vor der Weitergabe an den Verpackungsprozess auszusondern. Dies birgt erhebliche Prozessrisiken, da falsch positionierte Produkte in der Regel im weiterführenden Prozess zerstört werden. Dies gilt insbesondere für Brühwürfel, bei welchen es sich um besonders druckempfindliche und brüchige Produkte handelt. Bei fehlerhafter Positionierung während der Vereinzelung besteht die Gefahr, dass diese im Verlauf des weiteren Verpackungsprozesses zerstört werden. Dies führt zu einer erheblichen Maschinenverschmutzung, somit erhöhtem Reinigungsbedarf und letztendlich einer reduzierten Anlagenverfügbarkeit.

Darüber bringen bisherige Vakuumsynchronisationslösungen eine sehr aufwändige Bauweise mit sich, da sie zusätzlich zum Zuteilband ein vakuumgestütztes Beschleunigungsband und einen weiteren Transporteur, wie eine Kette oder ein Nockenband, benötigen. Dies führt aufgrund eines erhöhten Energiebedarfs und Reinigungsaufwands zu gesteigerten Kosten, erhöhtem Platzbedarf und zusätzlichen Störstellen im Bereich der Bandübergänge.

Der Erfindung liegt daher die Aufgabe zugrunde, ein Verfahren zur Vereinzelung und Verarbeitung kleinstückiger Produkte, insbesondere in einem Verpackungsprozess, in welchem die Produkte einzeln verpackt werden, bereitzustellen, um Störungen im Verpackungsprozess zu vermeiden. Ferner soll eine Vorrichtung zur Vereinzelung und Verarbeitung kleinstückiger Produkte, insbesondere zur Durchführung des Verfahrens bereitgestellt werden.

Diese Aufgabe wird hinsichtlich des Verfahrens erfindungsgemäß durch die Merkmale des Anspruches 1, hinsichtlich der Vorrichtung erfindungsgemäß durch die Merkmale des Anspruches 9 gelöst. Bevorzugte Ausgestaltungen der Erfindung sind Gegenstand der Unteransprüche.

Erfindungsgemäß wird jedes vereinzelte Produkt unmittelbar nach seiner Vereinzelung mittels einer Erfassungseinrichtung erfasst und eine Weiterverarbeitung oder Ausschleusung basierend auf dieser Erfassung vorgenommen. Durch die Erfassung des Produkts mittels einer Erfassungseinrichtung unmittelbar nach der Vereinzelung wird die Erfassung direkt nach dem Vorgang vorgenommen, der eine der Hauptquellen fehlpositionierter Produkte darstellt. Damit ist es möglich, eine Überprüfung des Produktzustands zum frühestmöglichen Zeitpunkt vorzunehmen, sodass Fehlpositionierungen oder Produktbeschädigungen rechtzeitig erkannt werden können.

Weiter wird das Produkt basierend auf der frühzeitigen Erfassung entweder weiterverarbeitet, beispielsweise in einem Packmittelabschnitt verpackt, oder aus dem Prozess ausgeschleust. Durch das Zusammenwirken der frühzeitigen Erfassung und der anschließenden Möglichkeit, das Produkt auszuschleusen, kann das Produkt entnommen werden, bevor es in den Verpackungsprozess gelangt und diesen stören kann. Folglich wird die Wahrscheinlichkeit signifikant verringert, dass fehlpositionierte und/oder beschädigte Produkte in einen nachgelagerten Verpackungsprozess gelangen können.

Vorzugsweise werden die Produkte in Schritt A kontinuierlich, vorzugsweise mehrbahnig, noch bevorzugter in parallelen Produktströmen, zugeführt. Insbesondere wird dabei Produktstau gebildet, wobei eine Positionierung und/oder Ausrichtung der Produkte in der Vereinzelungsstation weiter vorzugsweise mittels eines Sensors, noch bevorzugter mittels der Erfassungseinrichtung, insbesondere einer Lichtschranke, geregelt wird, vorzugsweise basierend auf der Erfassung einer Vorderflanke des jeweiligen Produktstroms bzw. Produktstaus.

Wie im Stand der Technik beschrieben, wird eine Synchronisierung der in einem Produktstau zugeführten Produkte und einer Vereinzelungseinrichtung, wie beispielsweise Greiforganen, Haltebackenpaaren oder Vakuumsaugern, unter Zuhilfenahme eines Sensors, wie einer Gabellichtschranke, geregelt. Dieser erfasst die Vorderflanke des Produktstaus. Basierend auf diesem Erfassungssignal werden beispielsweise ein Transportband und eine Vereinzelungseinrichtung so angesteuert, dass eine Synchronisierung der Bewegungen des zu vereinzelnden Produktes und der Vereinzelungseinrichtung ermöglicht wird. Erfindungsgemäß kann die Erfassungseinrichtung vorzugsweise sowohl zu diesem Zweck als auch zusätzlich dazu eingesetzt werden, um die Produkte jeweils nach ihrer Vereinzelung zu erfassen. Damit können beide Funktionen mit einer einzigen Erfassungseinrichtung, insbesondere einem einzigen Sensor, erfüllt werden, wodurch das Nutzungsspektrum und die Funktonalität des Sensors erweitert wird, ohne den Bauraum und/oder die Bauteilkosten nachteilig zu beeinflussen.

Weiter vorzugsweise werden die Produkte in Schritt B mittels Vereinzelungsorganen vereinzelt, die vorzugsweise an einem Rotationskopf angeordnet sind, insbesondere zur, vorzugsweise gleichzeitigen, Vereinzelung zueinander benachbarter Produkte paralleler Produktströme. Die Vereinzelungsorgane werden vorzugsweise im Moment der Vereinzelung mit den, insbesondere kontinuierlich, zugeführten Produkten synchronisiert, wobei die Vereinzelungsorgane zur Synchronisierung bevorzugt entgegen der Drehrichtung des Rotationskopfes geschwenkt werden.

Durch diese bevorzugte Ausgestaltung können die Produkte kontinuierlich zugeführt werden und in parallelen Produktströmen vereinzelt werden. Dadurch wird eine besonders hohe Ausbringleistung erzielt. Durch Schwenken der Vereinzelungsorgane zur Synchronisierung entgegen der Drehrichtung des Rotationskopfes kann eine besonders schonende Aufnahme der Produkte in den Vereinzelungsorganen sowie Entnahme der Produkte von der Zuführeinrichtung gewährleistet werden, da damit die Bewegungsrichtungen und Geschwindigkeiten der kontinuierlich zugeführten Produkte und der Vereinzelungsorgane zum Zeitpunkt der Vereinzelung aufeinander abgestimmt werden können.

Durch die Anordnung der Vereinzelungsorgane an einem Rotationskopf können die Produkte von einer linearen Transporteinrichtung abgehoben werden und in Bezug auf die Transporteinrichtung nach oben vereinzelt werden. Somit landen Bruchstücke etwaiger anschließend ausgeschleuster Produkte nicht auf Antriebskomponenten, wie einer Achse, des Rotationskopfes.

Noch bevorzugter wird in Schritt C eine Positionierung, insbesondere einer Rückflanke, jedes vereinzelten Produkts, vorzugsweise in einem und/oder bezüglich eines Vereinzelungsorgans mittels eines Sensors, insbesondere einer Lichtschranke, erfasst.

Wie vorangehend beschrieben, ist es dadurch möglich, einen einzigen Sensor sowohl zur Ausrichtung/Positionierung der zugeführten Produkte in der Vereinzelungsstation (beispielsweise durch Erfassung der Vorderflanke der Produkte bzw. des Produktstaus) als auch zur Überprüfung der Positionierung der vereinzelten Produkte in dem Vereinzelungsorgan zu verwenden.

Um beispielsweise fehlerhaft positionierte oder beschädigte Produkte in Schritt D auszuschleusen, wird vorzugsweise eine Produktweiche in eine Ausschleusposition überführt. Diese kann das auszuschleusende Produkt zum Beispiel abstreifen, beispielsweise aus einem Greifer oder Haltebackenpaar. Durch das Abstreifen wird eine Krafteinwirkung auf das auszuschleusende Produkt verringert, sodass dieses nicht weiter übermäßig beschädigt wird und Bruchteile davon in eine Verpackungsmaschine geschlagen werden.

Noch vorteilhafter wird das Produkt ausgeschleust, bevor es einer Position zugeführt wird, an welcher dem Produkt eine Packmittel zugeführt wird und/oder ein erster Verpackungsvorgang am Produkt ausgeführt wird. Damit kann ein unnötiger Packmittelverbrauch ressourcenschonend verhindert werden.

Im Falle einer mehrbahnigen Zuführung und Vereinzelung der Produkte, insbesondere in parallelen Produktströmen, ist es vorteilhaft, wenn zusammen mit einem auszuschleusenden Produkt gleichzeitig, insbesondere alle, Produkte ausgeschleust werden, die sich gleichzeitig benachbart zu dem auszuschleusenden Produkt in benachbarten Produktströmen befinden. Da Packmittelzuführungen komplett abgeschaltet werden, sollten bei Fehllage oder Beschädigung eines Produktes vorzugsweise alle Produktbahnen ausgesondert werden, um Störungen mit herkömmlichen Packmittelzuführeinrichtungen zu vermeiden, bzw. die Kompatibilität der vorliegenden Erfindung mit diesen zu ermöglichen.

Diesbezüglich wird weiter bevorzugt im Falle einer Ausschleusung eines Produkts eine Zufuhr eines dem ausgeschleusten Produkt zugeordneten Packmittelabschnitts vorübergehend unterbrochen. Dies verhindert gleichzeitig Störungen durch Packmittel-Abschnitte, die aufgrund der Produktausschleusung ohne Produkt durch die Maschine geführt werden.

Vorzugsweise wird in Schritt A während der Zuführung der Produkte ein Zustand jedes Produkts, insbesondere eine Höhe und/oder ein Abstand, erfasst, vorzugsweise mittels eines Höhensensors, und die Produkte werden in Schritt D basierend auf der Erfassung in Schritt C und der Erfassung in Schritt A weiterverarbeitet oder ausgeschleust.

Verwendet man einen zusätzlichen Höhensensor, beispielsweise über der Zuführeinrichtung, können Lücken im Produktstau schnell erkannt werden. Überdies können damit Beschädigungen an den Produkten, wie das Fehlen einer oberen Hälfte eines Produktes, erkannt werden, die mittels der Erfassungseinrichtung nicht erfasst werden. Mit anderen Worten können durch die Bereitstellung eines zusätzlichen Sensors zusätzliche Ansichten des Produkts abgetastet/erfasst werden. Dadurch kann erreicht werden, dass fehlerhafte Produkte zuverlässig ausgeschleust werden, selbst wenn die Erfassungseinrichtung diese fälschlicherweise beispielsweise als korrekt positioniert erfassen würde.

Es kann sich als hilfreich erweisen, wenn die Zuführeinrichtung konfiguriert ist, die Produkte kontinuierlich, vorzugsweise mehrbahnig, insbesondere in parallelen Produktströmen, zuzuführen, insbesondere unter Bildung eines Produktstaus in jedem der Produktströme, wobei die Zuführeinrichtung vorzugsweise zumindest ein Transportband oder Vakuum-Transportband umfasst. Insbesondere im Falle des Vakuum-Transportbandes ist eine hochdynamische Regelung einer Positionierung/Ausrichtung der Produkte in der Vereinzelungsstation möglich, wodurch Fehlpositionierungen bei der Vereinzelung vermieden werden können.

Weiter bevorzugt umfasst die Erfassungseinrichtung einen Sensor, insbesondere eine Lichtschranke, und ist vorzugsweise konfiguriert, um eine Positionierung, insbesondere eine Rückflanke jedes vereinzelten Produkts in der und/oder bezüglich der Vereinzelungseinrichtung zu erfassen, und ist noch bevorzugter zudem konfiguriert, um eine Vorderflanke des mindestens einen Produktstroms zu erfassen. Wie voranstehend erläutert, können dadurch beide Funktionen mit einer einzigen Erfassungseinrichtung, insbesondere einem einzigen Sensor, erfüllt werden, wodurch das Nutzungsspektrum und die Funktonalität des Sensors erweitert wird, ohne den Bauraum und/oder die Bauteilkosten nachteilig zu beeinflussen.

Noch bevorzugter umfasst die Vereinzelungseinrichtung, vorzugsweise jeweils für jeden Produktstrom, Vereinzelungsorgane, insbesondere Greifer, Vakuumsauger und/oder Haltebackenpaare, die vorzugsweise an einem Rotationskopf angeordnet sind, insbesondere zur, vorzugsweise gleichzeitigen, Aufnahme zueinander benachbarter Produkte paralleler Produktströme. Die Vereinzelungsorgane sind vorzugsweise konfiguriert, entgegen der Drehrichtung des Rotationskopfes geschwenkt werden, so dass sie jeweils im Moment der Vereinzelung mit den, insbesondere kontinuierlich, zugeführten Produkten synchronisiert sind. Wie vorangehend erläutert, ermöglicht dies eine besonders produktschonende Vereinzelung und verringert eine Beschädigung und/oder Fehlpositionierung der Produkte, sodass die Wahrscheinlichkeit vermieden wird, Produkte aus dem Prozess ausschleusen zu müssen.

Es kann sich als hilfreich erweisen, wenn die Verarbeitungseinrichtung eine Produktweiche umfasst, die konfiguriert ist, um in eine Ausschleusposition überführt zu werden, vorzugsweise um ein auszuschleusendes Produkt abzustreifen, wobei die Produktweiche so angeordnet ist, dass das auszuschleusende Produkt ausgeschleust werden kann, bevor es einer Position zugeführt wird, an welcher dem Produkt ein Packmittel zugeführt wird und/oder ein erster Verpackungsvorgang an ihm ausgeführt wird.

Dadurch kann eine Krafteinwirkung auf das auszuschleusende Produkt verringert werden, sodass dieses nicht weiter übermäßig beschädigt wird und Bruchteile davon in Komponenten der Vorrichtung geschlagen werden und diese beispielsweise durch korrosive Eigenschaften von Brühwürfeln angreifen.

Wie oben beschrieben, ist die Verarbeitungseinrichtung bei mehrbahniger Zuführung und Aufnahme der Produkte vorzugsweise konfiguriert, um zusammen mit einem auszuschleusenden Produkt gleichzeitig, insbesondere alle, Produkte auszuschleusen, die sich gleichzeitig benachbart zu dem auszuschleusenden Produkt in benachbarten Produktströmen befinden. Dies steigert die Kompatibilität der vorliegenden Erfindung mit herkömmlichen Packmittelzuführeinrichtungen.

Es kann sich weiter als hilfreich erweisen, wenn die Vorrichtung ferner eine Zustandserfassungseinrichtung, insbesondere einen Höhensensor, umfasst, die konfiguriert ist, um einen Zustand jedes Produkts, insbesondere eine Höhe und/oder einen Abstand, bei dessen Zuführung zu der Vereinzelungsstation zu erfassen und die Verarbeitungseinrichtung konfiguriert ist, die Produkte zusätzlich in Abhängigkeit des von der Zustandserfassungsvorrichtung ausgegebenen Signals weiterzuverarbeiten oder auszuschleusen.

Wie vorangehend ausgeführt, kann dadurch erreicht werden, dass fehlerhafte Produkte zuverlässig ausgeschleust werden, selbst wenn die Erfassungseinrichtung diese fälschlicherweise beispielsweise als korrekt positioniert erfassen würde.

### Begriffe und Definitionen

Der Begriff kleinstückige Produkte erstreckt sich insbesondere auf Süßwaren wie Schokoladenstücke, Toffees oder Pralinen, Hart- oder Weichkaramellen wie Bonbons oder Kaubonbons, aber auch auf Brüherzeugnisse wie Brühblöcke, Brühtabletten oder Brühwürfel sowie auf Wasch- oder Spülmaschinentabs. Die kleinstückige Produkte haben vorzugsweise eine ebene, insbesondere rechteckige Grundfläche.

Mit der Verarbeitung von Produkten ist insbesondere die (Einzel-)Verpackung der Produkte gemeint.

### Kurze Beschreibung der Figuren

Es zeigen:
Fig. 1 eine schematische Ansicht einer erfindungsgemäßen Vorrichtung, die zur Durchführung des erfindungsgemäßen Verfahrens ausgebildet ist, wobei Produkte in einem Produktstrom zu einer Vereinzelungsstation zugeführt werden und in der Vereinzelungsstation von einem als Vereinzelungseinrichtung dienenden Halteorgan eines Rotationskopfs aufgenommen und vereinzelt werden, wobei das Produkt sowohl vor als auch nach der Vereinzelung bzw. dessen Aufnahme im Halteorgan von einem Sensor erfasst wird, um die korrekte Positionierung des vereinzelten Produkts im Halteorgan zu erfassen.
Fig. 2 ein Detail der Vorrichtung gemäß Fig. 1, wobei der Sensor die Vorderflanke des im Produktstrom führenden Produkts vor der Vereinzelung bzw. vor dessen Aufnahme im Halteorgan erfasst.
Fig. 3 ein weiteres Detail der Vorrichtung gemäß Fig. 1, die Rückflanke des im Produktstrom führenden Produkts nach der Vereinzelung bzw. nach dessen Aufnahme im Halteorgan erfasst.
Fig. 4 ein weiteres Detail der Vorrichtung gemäß Fig. 1, insbesondere das Greifen des Produktes in Strecklage mit einem Halteorgan des Rotationskopfs.
Fig. 5 ein weiteres Detail der Vorrichtung gemäß Fig. 1, insbesondere eine Produktweiche, welche in Abhängigkeit eines vom Sensor erhaltenen Signals in Durchlassposition angeordnet ist.
Fig. 6 ein weiteres Detail der Vorrichtung gemäß Fig. 1, insbesondere eine Produktweiche, welche in Abhängigkeit eines vom Sensor erhaltenen Signals in Ausschleusposition angeordnet ist.
Fig. 7 ein weiteres Detail der Vorrichtung gemäß Fig. 1, wobei eine als Höhensensor ausgebildete Zustandserfassungseinrichtung über der Zuführeinrichtung angeordnet ist, um den Zustand der zugeführten Produkte zu erfassen.

### Detaillierte Beschreibung des bevorzugten Ausführungsbeispiels

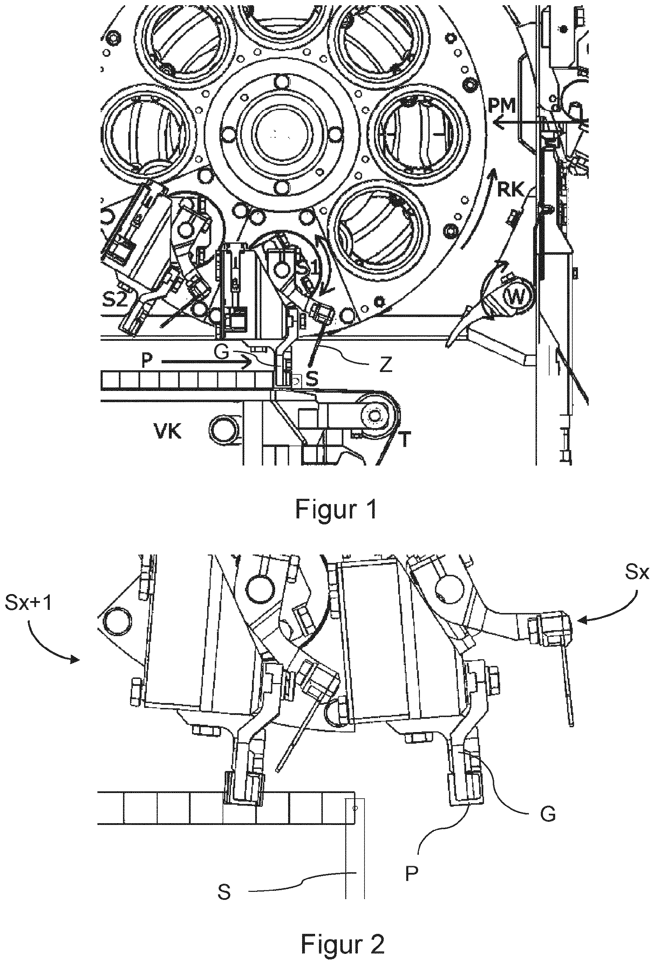

Die in Fig. 1 schematisch dargestellte Vorrichtung umfasst insbesondere eine als Transportband T ausgebildete Zuführeinrichtung, eine als Rotationskopf RK mit einer Vielzahl von Arbeitsstationen Sx und jeweils einem Halteorgan bzw. Greifer G ausgebildeten Vereinzelungseinrichtung und eine als Sensor S ausgebildete Erfassungseinrichtung, welche das in der Vereinzelungseinrichtung aufgenommene Produkt nach der Vereinzelung sensorisch erfasst. In Abhängigkeit von einer Signalausgabe der Erfassungseinrichtung wird das Produkt P einem weiteren Verarbeitungsprozess zuführt oder mittels einer Produktweiche W aus dem Verarbeitungsprozess ausgeschleust.

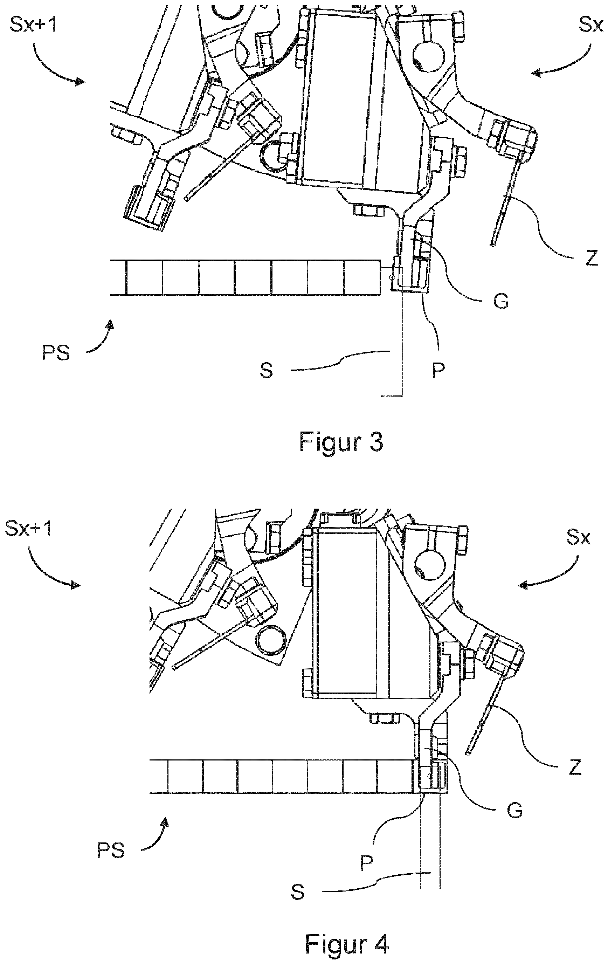

Nach dem erfindungsgemäßem Verfahren werden Produkte P kontinuierlich auf der als Transportband T ausgebildeten Zuführeinrichtung in Richtung der Vereinzelungsstation und in Richtung des Sensors S transportiert. Durch diesen Sensor S wird zunächst die Vorderflanke des gestauten Produktstroms PS erfasst (vgl. Fig. 2) und das Transportband T so geregelt, dass die Produkte P im Moment der Aufnahme durch das Halteorgan bzw. Greifer G der jeweiligen Arbeitsstation Sx des Rotationskopfs RK passend ausgerichtet sind (vgl. Fig. 4). Die Vakuumkammer VK sorgt für die Stabilisierung und eine hohe Regelungsdynamik der Produkte P auf dem Transportband T. Die Arbeitsstationen Sx schwenken im Moment der Produktentnahme entgegen der Rotationsrichtung des Rotationskopfs RK, um die Halteorgane bzw. Greifer G mit den kontinuierlich transportierten Produkten P zu synchronisieren.

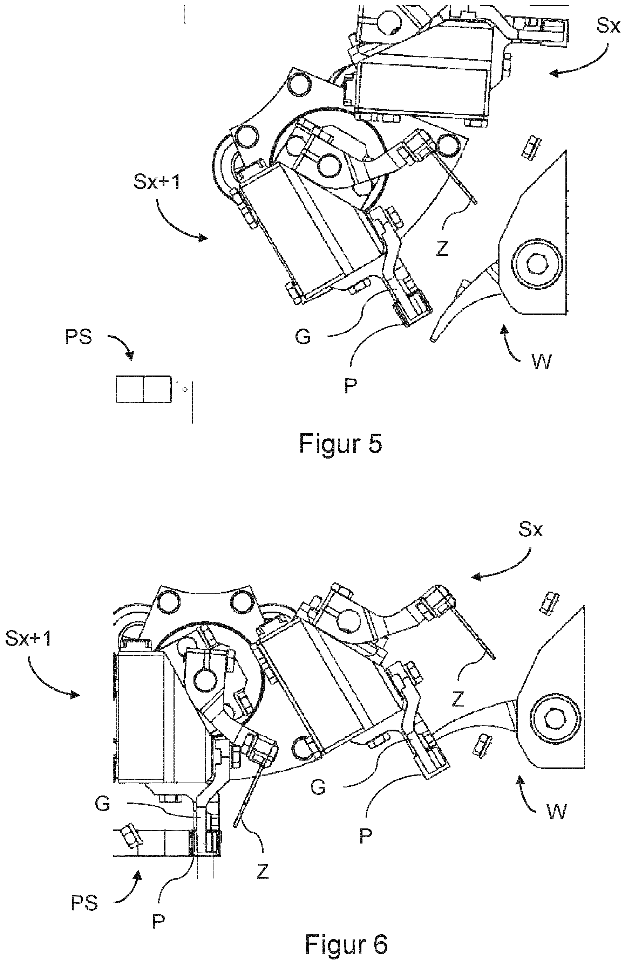

Erfindungsgemäß wird der Sensor S zur Erfassung der Rückflanke des bereits vereinzelten bzw. durch das Halteorgan G der jeweiligen Arbeitsstation Sx gegriffenen Produktes P verwendet. Damit wird überprüft, ob das Produkt P wie gewünscht durch die Arbeitsstation Sx übernommen wurde oder ob es eine Störung gab, die zur unerwünschten Fehlpositionierung des Produktes P in der Arbeitsstation Sx geführt hat. Im Falle einer korrekten Positionierung wird das Produkt P weiter in Richtung des Folgeprozesses transportiert, Packmittel PM hinzugefügt und verpackt. Dazu wird die Produktweiche W, wie in Fig. 5 dargestellt, in Durchlassposition gefahren. Das Produkt P wird demnach bestimmungsgemäß einem Verpackungsprozess zugeführt.

Wenn ein falsch positioniertes Produkt P in der Arbeitsstation Sx erfasst wird, dann darf dieses nach Möglichkeit nicht in den Verpackungsprozess gelangen. Die Fehllage des Produkts P würde zur Zerstörung des Produktes P führen und damit Störungen im Maschinenlauf begünstigen. Deshalb wird in diesem Fall die Produktweiche W in die Ausschleusposition verfahren und das Produkt P wird aus der Arbeitsstation Sx abgestreift, bevor es in den Verpackungsprozess gelangt (vgl. Fig. 6). Gleichzeitig wird auch die Zufuhr von Packmittel PM unterbrochen, um unnötigen Packmittelverbrauch zu vermeiden. Dadurch werden gleichzeitig Störungen durch Packmittelabschnitte verhindert, die ohne Produkt P durch die Maschine gefahren werden. Da die Packmittelbahn immer nur komplett abgeschaltet werden kann, müssen bei Fehllage eines Produktes P immer beide Bahnen ausgesondert werden. Deshalb sollte der Weichenmechanismus so ausgeführt werden, dass er immer für mehrere Bahnen gleichzeitig arbeitet.

Das oben beschriebene Zusammenwirken von Sensor S und Weiche W bringt weitere Vorteile mit sich, die nachstehend dargelegt werden.

Aufgrund der Weichenfunktion kann sich der Synchronisationsprozess bei Signalverlust selbst erholen und die Maschine muss nicht in Störung gehen. Das heißt: wenn der Sensor S aufgrund einer deutlichen Fehllage oder zerstörter Produkte P kein klares Signal mehr erfassen kann, dann können die Produkte P trotzdem durch die Arbeitsstationen Sx vom Transportband T gegriffen werden und "räumen dieses damit frei", bis es wieder ein klares Signal gibt. Die Verpackungseinrichtung wird nicht beeinträchtigt, da diese Produkte P in der Weiche W ausgesondert werden.

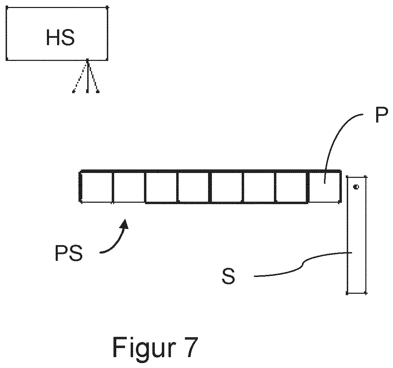

Verwendet man einen zusätzlichen Höhensensor HS (vgl. Fig. 7) über dem Transportband T, dann kann über diesen eine weitere Prozessoptimierung erreicht werden. (Fliegendes Einsynchronisieren beim Befüllen des Transportbandes T, Erkennen von Lücken im Produktstau und schnelleres Ausregeln dieser, Erkennen von beschädigten Produkten P, z.B.: obere Hälfte fehlt) und Aussondern dieser Produkten P selbst bei korrekter Positionierung zum Sensor S.

Ein weiterer Vorteil ist die automatische Lagekorrektur für die Produkte P zur Arbeitsstation Sx durch Trendauswertung der Rückflanke nach der Vereinzelung bzw. nach der Aufnahme in der Arbeitsstation Sx des Rotationskopfs RK.

Der Kerngedanke der Erfindung besteht also im sensorischen Erfassen eines Produkts P unmittelbar nach der Vereinzelung aus einem Produktstrom PS, insbesondere im sensorischen Erfassen der Position des Produktes P zu einem als Vereinzelungseinrichtung dienenden Halteorgan G einer Arbeitsstation Sx eines Rotationskopfs RK mit anschließender Auswertung der Produktposition im Halteorgan G. Ist die Position wie gewünscht, dann verbleibt das Produkt P im Verarbeitungsprozess. Alternativ wird das Produkt P aus dem Verarbeitungsprozess entnommen, um Störungen im Verarbeitungsprozess zu vermeiden. In diesem Fall wird auch die Zufuhr von Packmittel PM unterbrochen, um Ressourcen zu sparen.

### Bezugszeichenliste

- G: Greifer bzw. Halteorgan (Vereinzelungseinrichtung)
- HS: Höhensensor (Zustandserfassungseinrichtung)
- P: Produkte
- PM: Packmittel
- PS: Produktstrom
- RK: Rotationskopf
- S: Sensor bzw. Lichtschranke (Erfassungseinrichtung)
- Sx: Arbeitstation des Rotationskopfs
- Sx+1: Nachfolgende Arbeitstation des Rotationskopfs
- T: Transportband (Zuführungseinrichtung)
- VK: Vakuumkammer
- W: Produktweiche
- Z: Packmittelzange

## Patentansprüche

1. Verfahren zur Vereinzelung und Verarbeitung kleinstückiger Produkte (P), insbesondere in einem Verpackungsprozess, in welchem die Produkte (P) einzeln verpackt werden, umfassend die Schritte:
a. Schritt A: Zuführung der Produkte (P) in mindestens einem Produktstrom (PS) zu einer Vereinzelungsstation;
b. Schritt B: Vereinzelung der zugeführten Produkte (P) aus dem Produktstrom (PS) in der Vereinzelungsstation;
c. Schritt C: Erfassung jedes vereinzelten Produkts (P) unmittelbar nach der Vereinzelung mittels einer Erfassungseinrichtung (S);
d. Schritt D: Weiterverarbeitung oder Ausschleusung der Produkte (P) basierend auf der Erfassung in Schritt C.

2. Verfahren nach Anspruch 1, wobei die Produkte (P) in Schritt A kontinuierlich, vorzugsweise mehrbahnig, noch bevorzugter in parallelen Produktströmen, zugeführt werden, insbesondere unter Bildung eines Produktstaus, wobei eine Positionierung und/oder Ausrichtung der Produkte (P) in der Vereinzelungsstation weiter vorzugsweise mittels eines Sensors (S), noch bevorzugter mittels der Erfassungseinrichtung (S), insbesondere einer Lichtschranke, geregelt wird, vorzugsweise basierend auf der Erfassung einer Vorderflanke des jeweiligen Produktstroms (PS) bzw. Produktstaus.

3. Verfahren nach einem der vorangehenden Ansprüche, wobei die Produkte (P) in Schritt B mittels Vereinzelungsorganen (G) vereinzelt werden, die vorzugsweise an einem Rotationskopf (RK) angeordnet sind, insbesondere zur, vorzugsweise gleichzeitigen, Vereinzelung zueinander benachbarter Produkte (P) paralleler Produktströme (PS) und im Moment der Vereinzelung mit den, insbesondere kontinuierlich, zugeführten Produkten (P) synchronisiert werden, wobei die Vereinzelungsorgane (G) zur Synchronisierung bevorzugt entgegen der Drehrichtung des Rotationskopfes (RK) geschwenkt werden.

4. Verfahren nach einem der vorangehenden Ansprüche, wobei in Schritt C eine Positionierung, insbesondere einer Rückflanke, jedes vereinzelten Produkts (P), vorzugsweise in einem und/oder bezüglich eines Vereinzelungsorgans (G) mittels eines Sensors (S), insbesondere einer Lichtschranke, erfasst wird.

5. Verfahren nach einem der vorangehenden Ansprüche, wobei in Schritt D zur Ausschleusung eines Produktes (P) eine Produktweiche (W) in eine Ausschleusposition überführt wird, vorzugsweise um das auszuschleusende Produkt (P) abzustreifen, insbesondere bevor das Produkt (P) einer Position zugeführt wird, an welcher dem Produkt (P) eine Packmittel (PM) zugeführt wird und/oder ein erster Verpackungsvorgang am Produkt (P) ausgeführt wird.

6. Verfahren nach dem vorangehenden Anspruch, wobei die Produkte (P) mehrbahnig, noch bevorzugter in parallelen Produktströmen (PS), zugeführt und vereinzelt werden und zur Ausschleusung eines Produktes (P) die Produktweiche (P) in die Ausschleusposition überführt wird, um zusammen mit dem auszuschleusenden Produkt (P) gleichzeitig, insbesondere alle, Produkte auszuschleusen, die sich gleichzeitig benachbart zu dem auszuschleusenden Produkt (P) in benachbarten Produktströmen (PS) befinden.

7. Verfahren nach einem der vorangehenden Ansprüche, wobei im Falle einer Ausschleusung eines Produkts (P) eine Zufuhr eines dem ausgeschleusten Produkt (P) zugeordneten Packmittelabschnitts (PM) vorübergehend unterbrochen wird.

8. Verfahren nach einem der vorangehenden Ansprüche, wobei in Schritt A während der Zuführung der Produkte (P) ein Zustand jedes Produkts (P), insbesondere eine Höhe und/oder ein Abstand, erfasst wird, vorzugsweise mittels eines Höhensensors (HS), und die Produkte (P) in Schritt D basierend auf der Erfassung in Schritt C und der Erfassung in Schritt A weiterverarbeitet oder ausgeschleust werden.

9. Vorrichtung zur Vereinzelung und Verarbeitung kleinstückiger Produkte (P), insbesondere zur Durchführung des Verfahrens nach einem der vorangehenden Ansprüche, umfassend:
eine Zuführeinrichtung zur Zuführung der Produkte (P) in mindestens einem Produktstrom (PS) zu einer Vereinzelungsstation;
eine Vereinzelungseinrichtung (G) zur Vereinzelung der zugeführten Produkte (P) in der Vereinzelungsstation;
eine Erfassungseinrichtung (S) zur Erfassung jedes vereinzelten Produkts unmittelbar nach dessen Vereinzelung in der Vereinzelungseinrichtung (G); und
eine Verarbeitungseinrichtung zur Weiterverarbeitung oder Ausschleusung der Produkte (G) in Abhängigkeit eines von der Erfassungseinrichtung ausgegebenen Signals.

10. Vorrichtung nach dem vorangehenden Anspruch, wobei die Zuführeinrichtung konfiguriert ist, die Produkte (P) kontinuierlich, vorzugsweise mehrbahnig, insbesondere in parallelen Produktströmen (PS), zuzuführen, insbesondere unter Bildung eines Produktstaus in jedem der Produktströme (PS), wobei die Zuführeinrichtung (T) vorzugsweise zumindest ein Transportband (T) oder Vakuum-Transportband umfasst.

11. Vorrichtung nach einem der beiden vorangehenden Ansprüche, wobei die Erfassungseinrichtung (S) einen Sensor (S), insbesondere eine Lichtschranke, umfasst und vorzugsweise konfiguriert ist, um eine Positionierung, insbesondere eine Rückflanke jedes vereinzelten Produkts (P) in der und/oder bezüglich der Vereinzelungseinrichtung (G) zu erfassen, und noch bevorzugter zudem konfiguriert ist, um eine Vorderflanke des mindestens einen Produktstroms (PS) zu erfassen.

12. Vorrichtung nach einem der drei vorangehenden Ansprüche, wobei die Vereinzelungseinrichtung (G), vor-zugsweise jeweils für jeden Produktstrom (PS), Vereinzelungsorgane, insbesondere Greifer, Vakuumsauger und/oder Haltebackenpaare, umfasst, die vorzugsweise an einem Rotationskopf (RK) angeordnet sind, insbesondere zur, vorzugsweise gleichzeitigen, Aufnahme zueinander benachbarter Produkte (P) paralleler Produktströme (PS), und vorzugsweise konfiguriert sind, entgegen der Drehrichtung des Rotationskopfes (RK) geschwenkt werden, so dass sie jeweils im Moment der Vereinzelung mit den, insbesondere kontinuierlich, zugeführten Produkten (P) synchronisiert sind.

13. Vorrichtung nach einem der vier vorangehenden Ansprüche, wobei die Verarbeitungseinrichtung eine Produktweiche (W) umfasst, die konfiguriert ist, um in eine Ausschleusposition überführt zu werden, vorzugsweise um ein auszuschleusendes Produkt abzustreifen, wobei die Produktweiche (W) so angeordnet ist, dass das auszuschleusende Produkt (P) ausgeschleust werden kann, bevor es einer Position zugeführt wird, an welcher dem Produkt (P) ein Packmittel (PM) zugeführt wird und/oder ein erster Verpackungsvorgang an ihm ausgeführt wird.

14. Vorrichtung nach einem der fünf vorangehenden Ansprüche, wobei die Verarbeitungseinrichtung bei mehrbahniger Zuführung und Aufnahme der Produkte (P) konfiguriert ist, um zusammen mit einem auszuschleusenden Produkt (P) gleichzeitig, insbesondere alle, Produkte (P) auszuschleusen, die sich gleichzeitig benachbart zu dem auszuschleusenden Produkt (P) in benachbarten Produktströmen (PS) befinden.

15. Vorrichtung nach einem der sechs vorangehenden Ansprüche, ferner umfassend eine Zustandserfassungseinrichtung, insbesondere einen Höhensensor (HS), die konfiguriert ist, um einen Zustand jedes Produkts, insbesondere eine Höhe und/oder ein Abstand, bei dessen Zuführung zu der Vereinzelungsstation zu erfassen und die Verarbeitungseinrichtung konfiguriert ist, die Produkte (P) zusätzlich in Abhängigkeit des von der Zustandserfassungsvorrichtung ausgegebenen Signals weiterzuverarbeiten oder auszuschleusen.
